# EUROPÄISCHE PATENTANMELDUNG

(11) **EP 1 731 786 A2**
(43) Veröffentlichungstag der Anmeldung: **13.12.2006**
(21) Anmeldenummer: 06009817.5
(22) Anmeldetag: 12.05.2006
(51) Int. Cl.: F16D 13/64

(54) **Kupplungsscheibe**

(30) Priorität: 09.06.2005 DE 102005026470
(71) Anmelder: LuK Lamellen und Kupplungsbau Beteiligungs KG, 77815 Bühl (DE)
(72) Erfinder: Neumaier-Tang, Christoph, 76316 Malsch (DE); Lehmann, Steffen, 76275 Ettlingen (DE); Friedmann, Oswald, 77839 Lichtenau (DE); Voit, Alexander, 77815 Bühl (DE)

(57) **Zusammenfassung**

Die Erfindung betrifft eine Kupplungsscheibe für eine Kupplung, insbesondere eine Doppelkupplung (6), mit einem Außenring (52;130) und einer Nabeneinrichtung (33,123), die drehfest und lösbar, das heißt wiederholt zerstörungsfrei trennbar, mit dem Außenring verbunden ist.

Um eine Kupplungsscheibe zu schaffen, die einfach und schnell montierbar ist, umfasst die Kupplungsscheibe ein Multifunktionsteil (77;147), das eine Schnappverbindung und/oder eine Zentrierung der Nabeneinrichtung relativ zu dem Außenring ermöglicht.

## Beschreibung

Die Erfindung betrifft eine Kupplungsscheibe für eine Kupplung, insbesondere eine Doppelkupplung, mit einem Außenring und einer Nabeneinrichtung, die drehfest und lösbar, das heißt wiederholt zerstörungsfrei trennbar, mit dem Außenring verbunden ist.

Aufgabe der Erfindung ist es, eine Kupplungsscheibe für eine Kupplung, insbesondere eine Doppelkupplung, mit einem Außenring und einer Nabeneinrichtung, die drehfest und lösbar, das heißt wiederholt zerstörungsfrei trennbar, mit dem Außenring verbunden ist, zu schaffen, die einfach und schnell montierbar ist.

Die Aufgabe ist bei einer Kupplungsscheibe für eine Kupplung, insbesondere eine Doppelkupplung, mit einem Außenring und einer Nabeneinrichtung, die drehfest und lösbar, das heißt wiederholt zerstörungsfrei trennbar, mit dem Außenring verbunden ist, dadurch gelöst, dass die Kupplungsscheibe ein Multifunktionsteil umfasst, das eine Schnappverbindung und/oder eine Zentrierung der Nabeneinrichtung relativ zu dem Außenring ermöglicht. Im montierten Zustand darf die maximale Unwucht der Kupplungsscheibe einen bestimmten Grenzwert nicht überschreiten. Im Rahmen der vorliegenden Erfindung hat sich herausgestellt, dass das zur Realisierung der lösbaren Verbindung zwischen der Nabeneinrichtung und dem Außenring notwendige Fügespiel, insbesondere dessen radialer Anteil, und/oder die fertigungsbedingten Toleranzen unerwünscht große Schwingungen der Kupplungsscheibe verursachen können. Durch die Zentrierung des Außenrings relativ zu der Nabeneinrichtung kann insbesondere das Radialspiel zwischen der Nabeneinrichtung und dem Außenring minimiert beziehungsweise eliminiert werden. Die Schnappverbindung vereinfacht den Zusammenbau der Kupplungsscheibe erheblich. Durch die Schnappverbindung wird eine axiale Sicherung der Kupplungsscheibe in einer axialen Richtung ermöglicht.

Ein bevorzugtes Ausführungsbeispiel der Kupplungsscheibe ist dadurch gekennzeichnet, dass das Multifunktionsteil mehrere in Umfangsrichtung verteilt angeordnete und in tangentialer Richtung wirkende, elastische Zentrierlaschen aufweist. Die Nabeneinrichtung ist vorzugsweise durch Verzahnungen drehfest mit dem Außenring verbindbar. Die Zentrierlaschen dienen zur Verspannung und zur Flankenzentrierung der Verzahnungen.

Ein weiteres bevorzugtes Ausführungsbeispiel der Kupplungsscheibe ist dadurch gekennzeichnet, dass das Multifunktionsteil verschiedene Positionierelemente aufweist, die eine definierte Positionierung der Nabeneinrichtung relativ zu dem Außenring ermöglichen. Die Positionierelemente gewährleisten, dass die Nabeneinrichtung nur in einer eindeutigen Position relativ zu dem Außenring montierbar ist.

Ein weiteres bevorzugtes Ausführungsbeispiel der Kupplungsscheibe ist dadurch gekennzeichnet, dass die Positionierelemente so gestaltet und/oder angeordnet sind, dass sie eine Vorzentrierung der Nabeneinrichtung relativ zu dem Außenring ermöglichen. Durch das Vorzentrieren wird die Montage erheblich vereinfacht.

Ein weiteres bevorzugtes Ausführungsbeispiel der Kupplungsscheibe ist dadurch gekennzeichnet, dass das Multifunktionsteil mehrere in Umfangsrichtung verteilt angeordnete in radialer Richtung wirkende, elastische Schnapphaken aufweist. Die Schnapphaken vereinfachen die nachträgliche Montage der Nabeneinrichtung und sichern die lösbare Verbindung zwischen der Nabeneinrichtung und dem Außenring in einer axialen Richtung.

Ein weiteres bevorzugtes Ausführungsbeispiel der Kupplungsscheibe ist dadurch gekennzeichnet, dass die Nabeneinrichtung mit Hilfe eines Sicherungsrings in einer axialen Richtung relativ zu dem Außenring gesichert ist. Der Sicherungsring wird nach dem Zusammenbau der Kupplungsscheibe vorzugsweise mit Hilfe eines geeigneten Werkzeugs eingesetzt. Vorteilhafterweise ist der Sicherungsring geschlitzt ausgebildet, so dass sein Umfang zum Einbau verkleinert werden kann.

Ein weiteres bevorzugtes Ausführungsbeispiel der Kupplungsscheibe ist dadurch gekennzeichnet, dass das Multifunktionsteil mehrere Sicherungslaschen aufweist, die den Sicherungsring im eingebauten Zustand teilweise umgreifen. Die Sicherungslaschen vereinfachen die nachträgliche Montage der Nabeneinrichtung und sichern die lösbare Verbindung zwischen der Nabeneinrichtung und dem Außenring in einer axialen Richtung.

Ein weiteres bevorzugtes Ausführungsbeispiel der Kupplungsscheibe ist dadurch gekennzeichnet, dass das Multifunktionsteil eine Verdrehsicherungslasche aufweist, die im eingebauten Zustand des Sicherungsrings in diesen eingreift. Die Verdrehsicherungslasche erstreckt sich vorzugsweise in radialer Richtung von dem Multifunktionsteil nach innen.

Ein weiteres bevorzugtes Ausführungsbeispiel der Kupplungsscheibe ist dadurch gekennzeichnet, dass das Multifunktionsteil mindestens ein Langloch und/oder mehrere Rundlöcher aufweist, das beziehungsweise die so angeordnet und gestaltet ist beziehungsweise sind, dass es beziehungsweise sie eine definierte Positionierung einer Montagevorrichtung relativ zu dem Multifunktionsteil ermöglicht beziehungsweise ermöglichen. Dadurch wird gewährleistet, dass die Nabeneinrichtung nur in einer eindeutigen Position relativ zu dem Außenring montierbar ist.

Ein weiteres bevorzugtes Ausführungsbeispiel der Kupplungsscheibe ist dadurch gekennzeichnet, dass das Multifunktionsteil an dem Außenring befestigt ist. Das Multifunktionsteil ist vorzugsweise mit Hilfe von Nietverbindungen an dem Außenring befestigt.

Ein weiteres bevorzugtes Ausführungsbeispiel der Kupplungsscheibe ist dadurch gekennzeichnet, dass das Multifunktionsteil aus Blech gebildet ist. Die Herstellung des Multifunktionsteils erfolgt vorzugsweise durch Stanzen und Umformen.

Ein weiteres bevorzugtes Ausführungsbeispiel der Kupplungsscheibe ist dadurch gekennzeichnet, dass die Kupplungsscheibe, insbesondere der Außenring, Belagfedersegmente aufweist, die den Außenring und die Nabeneinrichtung in einer axialen Richtung relativ zueinander sichern. Dadurch werden auf einfache Art und Weise bereits vorhandene Elemente zur axialen Sicherung genutzt.

Ein weiteres bevorzugtes Ausführungsbeispiel der Kupplungsscheibe ist dadurch gekennzeichnet, dass der Außenring eine Innenverzahnung aufweist, in welche eine Außenverzahnung eingreift, die an der Nabeneinrichtung vorgesehen ist. Dadurch wird eine stabile Drehmomentübertragung zwischen dem Außenring und der Nabeneinrichtung gewährleistet.

Ein weiteres bevorzugtes Ausführungsbeispiel der Kupplungsscheibe ist dadurch gekennzeichnet, dass die Nabeneinrichtung einen Drehschwingungsdämpfer umfasst. Der Drehschwingungsdämpfer dient dazu, im Betrieb auftretende Drehschwingungen zu dämpfen.

Bei einer Drehmomentübertragungseinrichtung im Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, und einem Getriebe mit zwei Getriebeeingangswellen, die jeweils mit einer Reibbeläge aufweisenden Kupplungsscheibe einer Doppelkupplung drehfest verbunden sind, ist die vorab angegebene Aufgabe dadurch gelöst, dass an einer der Getriebeeingangswellen eine vorab beschriebene Kupplungsscheibe lösbar, das heißt zerstörungsfrei trennbar, befestigt ist. Vorzugsweise ist die erfindungsgemäße Kupplungsscheibe motorseitig an einer der Getriebeeingangswellen befestigt und behindert den Zugang zu einem Lagersicherungsring, mit dessen Hilfe eine Lagereinrichtung einer Zwischendruckplatte der Doppelkupplung auf der anderen Getriebeeingangswelle in einer axialen Richtung gesichert wird. Durch die zweigeteilte Ausführung der Kupplungsscheibe wird der Zugang zu der Lagereinrichtung der Zwischendruckplatte erleichtert. Vorzugsweise wird die Nabeneinrichtung der Kupplungsscheibe der vormontierten Doppelkupplung lose beigelegt und erst nach der Anbringung des Lagersicherungsrings montiert.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine Drehmomentübertragungseinrichtung mit einer zweigeteilten Kupplungsscheibe gemäß einem ersten Ausführungsbeispiel im Halbschnitt;
- Figur 2: eine Nabeneinrichtung der Kupplungsscheibe aus Figur 1 im Längsschnitt;
- Figur 3: einen Außenring der Kupplungsscheibe aus Figur 1 im Längsschnitt;
- Figur 4: eine vergrößerte Detailansicht der Kupplungsscheibe aus Figur 1 im Längsschnitt;
- Figur 5: die Ansicht eines Längsschnitts der Kupplungsscheibe aus Figur 1 an einer anderen Stelle wie in Figur 4;
- Figur 6: eine vergrößerte Ansicht eines in Umfangsrichtung verlaufenden Schnitts durch die Kupplungsscheibe aus Figur 1;
- Figur 7: die Kupplungsscheibe aus Figur 1 in einer Seitenansicht von rechts;
- Figur 8: die Kupplungsscheibe aus Figur 1 in einer Seitenansicht von links;
- Figur 9: eine Drehmomentübertragungseinrichtung mit einer zweigeteilten Kupplungsscheibe gemäß einem zweiten Ausführungsbeispiel im Halbschnitt;
- Figur 10: einen Außenring der Kupplungsscheibe aus Figur 9 im Längsschnitt;
- Figur 11: eine Nabeneinrichtung der Kupplungsscheibe aus Figur 9 im Längsschnitt;
- Figur 12: einen Sicherungsring für die Kupplungsscheibe aus Figur 9 im Längsschnitt;
- Figur 13: eine vergrößerte Detailansicht der Kupplungsscheibe aus Figur 9 im Längsschnitt;
- Figur 14: eine vergrößerte Ansicht eines in Umfangsrichtung verlaufenden Schnitts der Kupplungsscheibe aus Figur 9;
- Figur 15: eine weitere Detailansicht der Kupplungsscheibe aus Figur 9 im Längsschnitt;
- Figur 16: die Kupplungsscheibe aus Figur 9 in einer Seitenansicht von rechts;
- Figur 17: die Kupplungsscheibe aus Figur 1 in einer Seitenansicht von links;
- Figuren 18 bis 21: die Kupplungsscheibe aus Figur 9 in verschiedenen Stadien bei der Montage mit Hilfe einer Montagevorrichtung und
- Figur 22: eine perspektivische Darstellung der Montagevorrichtung.

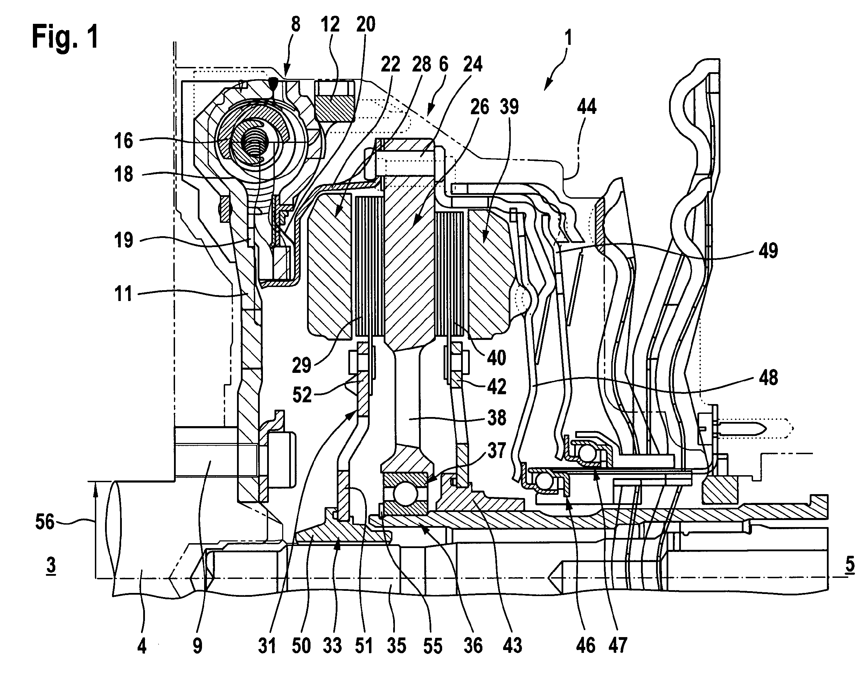

In Figur 1 ist ein Teil eines Antriebsstrangs 1 eines Kraftfahrzeugs dargestellt. Zwischen einer Antriebseinheit 3, insbesondere einer Brennkraftmaschine, von der eine Kurbelwelle 4 ausgeht, und einem Getriebe 5 ist eine Doppelkupplung 6 angeordnet. Zwischen die Antriebseinheit 3 und die Doppelkupplung 6 ist eine Drehschwingungsdämpfungseinrichtung 8 geschaltet. Bei der Drehschwingungsdämpfungseinrichtung 8 handelt es sich um ein Zweimassenschwungrad, das auch als Torsionsschwingungsdämpfer bezeichnet wird.

Die Kurbelwelle 4 der Brennkraftmaschine 3 ist über Schraubverbindungen 9 fest mit einem Eingangsteil 11 der Drehschwingungsdämpfungseinrichtung 8 verbunden. Das Eingangsteil 11 der Drehschwingungsdämpfungseinrichtung 8 hat im Wesentlichen die Gestalt einer sich in radialer Richtung erstreckenden Kreisringscheibe, die radial außen einen Schwingungsdämpferkäfig bildet. An dem Eingangsteil 11 ist radial außen ein Anlasserzahnkranz 12 befestigt. In dem Schwingungsdämpferkäfig ist mindestens eine Energiespeichereinrichtung, insbesondere eine Federeinrichtung 16, zumindest teilweise aufgenommen. In die Federeinrichtung 16 greift ein Ausgangsteil 18 der Drehschwingungsdämpfungseinrichtung 8 ein. Zwischen dem Eingangsteil 11 und dem Ausgangsteil 18 ist ein Gleit-/Reibring 19 angeordnet, der an dem Eingangsteil 11 befestigt ist. Zwischen dem Ausgangsteil 18 und einem Kupplungsgehäuseteil 22 ist eine Tellerfeder 20 so vorgespannt, dass das Ausgangsteil 18 der Drehschwingungsdämpfungseinrichtung 8 gegen den Gleit-/Reibring 19 gedrückt wird.

Radial innen ist das Ausgangsteil 18 der Drehschwingungsdämpfungseinrichtung 8 lösbar, das heißt zerstörungsfrei trennbar, und drehfest mit dem Kupplungsgehäuseteil 22 verbunden. An dem Kupplungsgehäuseteil 22 ist mit Hilfe von Nietverbindungen, von denen in der Schnittdarstellung nur eine Nietverbindung 24 zu sehen ist, eine Zwischendruckplatte 26 befestigt. Antriebsseitig sind zwischen der Zwischendruckplatte 26 und einer Druckplatte 28 Reibbeläge 29 einer ersten Kupplungsscheibe 31 einklemmbar. Die erste Kupplungsscheibe 31 ist über eine Nabeneinrichtung 33 drehfest mit einer ersten Getriebeeingangswelle 35 verbunden, die als Vollwelle ausgebildet ist. Die erste Getriebeeingangswelle 35 ist in einer zweiten Getriebeeingangswelle 36, die als Hohlwelle ausgebildet ist, drehbar angeordnet. An dem antriebsseitigen Ende der zweiten Getriebeeingangswelle 36 ist mit Hilfe eines Wälzlagers 37 ein Nabenteil 38 drehbar gelagert, an dem radial außen die Zwischendruckplatte 26 angebracht ist. Getriebeseitig sind zwischen der Zwischendruckplatte 26 und einer Druckplatte 39 Reibbeläge 40 einer zweiten Kupplungsscheibe 42 einklemmbar. Die zweite Kupplungsscheibe 42 ist über ein Nabenteil 43 drehfest mit der zweiten Getriebeeingangswelle 36 verbunden.

Die Doppelkupplung 6 weist ein Kupplungsgehäuse 44 auf, an dem die Druckplatten 28, 39 axial verschiebbar drehfest angebracht sind. Außerdem ist die Zwischendruckplatte 26 an dem Kupplungsgehäuse 44 befestigt. Das Kupplungsgehäuse 44 ist über das Kupplungsgehäuseteil 22 und die Drehschwingungsdämpfungseinrichtung 8 mit der Kurbelwelle 4 verbunden. Die Doppelkupplung 6 wird in bekannter Art und Weise über Betätigungseinrichtungen 46, 47, die mit Betätigungshebeln 48, 49 zusammenwirken, betätigt.

Die Nabeneinrichtung 33 umfasst eine Nabe 50, die drehfest und in axialer Richtung verschiebbar auf der Getriebeeingangswelle 35 angeordnet ist. Radial außen ist an der Nabe 50 ein innerer Flanschring 51 befestigt. Der innere Flanschring 51 ist lösbar, das heißt zerstörungsfrei trennbar, drehfest mit einem äußeren Flanschring 52 verbunden. Der innere Flanschring 51 wird auch als Innenring bezeichnet. Analog wird der äußere Flanschring 52 auch als Außenring bezeichnet.

Vorzugsweise werden die zweite Kupplungsscheibe 42 und das Nabenteil 38 mit der Zwischendruckplatte 26 sowie das Wälzlager 37 getriebeseitig vormontiert. Nach der Vormontage wird das Wälzlager 37 mit Hilfe eines Lagersicherungsrings 55 in axialer Richtung gesichert. Darüber hinaus wird der äußere Flanschring 52, an dem die Reibbeläge 29 befestigt sind, ebenfalls vormontiert. Die Nabeneinrichtung 33 wird dagegen nicht vormontiert, um die Anbringung des Lagersicherungsrings 55 zur axialen Fixierung des Wälzlagers 37 an dem getriebeseitigen Ende der zweiten Getriebeeingangswelle 36 zu ermöglichen.

Zur Montage der Doppelkupplung 6 auf der Hohlwelle 36 des in Figur 1 dargestellten Doppelkupplungsgetriebes ist die erste Kupplungsscheibe 31 zweigeteilt ausgebildet. Im ausgebauten Zustand der Nabeneinrichtung 33 wird radial innerhalb des Außenrings 52 eine Montageöffnung 56 freigegeben. Die Montageöffnung 56 ermöglicht die Montage des Lagersicherungsrings 55 des Wälzlagers 37. Selbstverständlich kann anstelle des Wälzlagers 37 auch ein Gleitlager eingebaut werden. Erst nach dem Montieren des Lagersicherungsrings 55 kann die Nabeneinrichtung 33 der ersten Kupplungsscheibe 31 endgültig montiert und drehfest mit dem Außenring 52 verbunden werden. Dabei ist darauf zu achten, dass die maximal zulässige Unwucht der komplett montierten ersten Kupplungsscheibe 31 einen bestimmten Grenzwert nicht überschreitet.

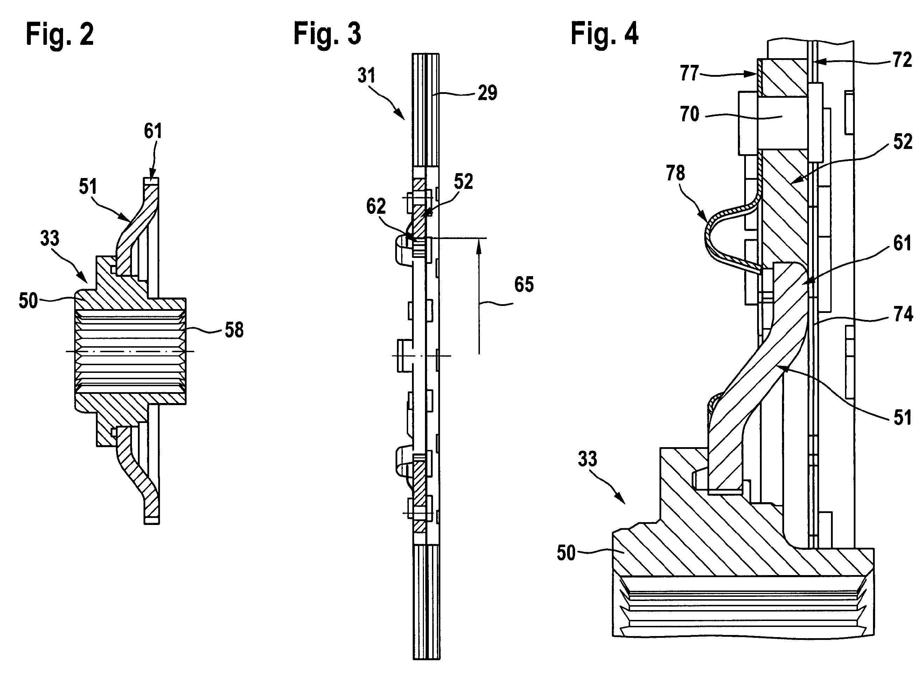

In Figur 2 ist die Nabeneinrichtung 33 allein im Längsschnitt dargestellt. In Figur 2 sieht man, dass die Nabe 50 ein zentrales Durchgangsloch mit einer Innenverzahnung 58 aufweist. Die Innenverzahnung 58 dient dazu, die Nabe 50 drehfest, aber axial verschiebbar, auf der Getriebeeingangswelle 35 zu montieren. Außerdem weist der Innenring 51 radial außen eine Außenverzahnung 61 auf.

In Figur 3 ist der Außenring 52 aus Figur 1 allein im Längsschnitt dargestellt. Der Außenring 52 weist radial innen ein zentrales Durchgangsloch mit einer Innenverzahnung 62 auf, in welche die Außenverzahnung 61 der Nabeneinrichtung 33 im zusammengebauten Zustand der ersten Kupplungsscheibe 31 eingreift. Das zentrale Durchgangsloch des Außenrings 52 weist einen Öffnungsdurchmesser 65 auf, welcher der Montageöffnung (56 in Figur 1) entspricht.

In Figur 4 sieht man, dass mit Hilfe von Nietverbindungen 70, Federsegmente 72 an dem Außenring 52 befestigt sind. Radial außen sind an den Federsegmenten 72 die Kupplungsbeläge (29 in Figur 1) der ersten Kupplungsscheibe 31 befestigt. Radial innen weisen die Federsegmente 72 Federsegmentfüße 74 auf, an denen der Innenring 51 im Bereich seiner Außenverzahnung 61 anliegt. Durch die Federsegmentfüße 74 wird der Innenring 51 in einer axialen Richtung gesichert.

Auf der den Federsegmenten 72 abgewandten Seite ist mit Hilfe der Nietverbindungen 70, von denen in Figur 4 nur eine zu sehen ist, ein Multifunktionsteil 77 befestigt. Das Multifunktionsteil 77 ist aus Blech gebildet und wird deshalb auch als Multifunktionsblech oder Kombinationsblech bezeichnet. Radial innen weist das Multifunktionsteil 77 mehrere in Umfangsrichtung verteilt angeordnete Schnapphaken auf, von denen in Figur 4 nur ein Schnapphaken 78 sichtbar ist. Der Schnapphaken 78 sichert den Innenring 51 in der anderen axialen Richtung. Somit ist der Innenring 51 im Bereich seiner Außenverzahnung 61 in axialer Richtung zwischen dem freien Ende des Schnapphakens 78 und den Federsegmentfüßen 74 angeordnet und gesichert.

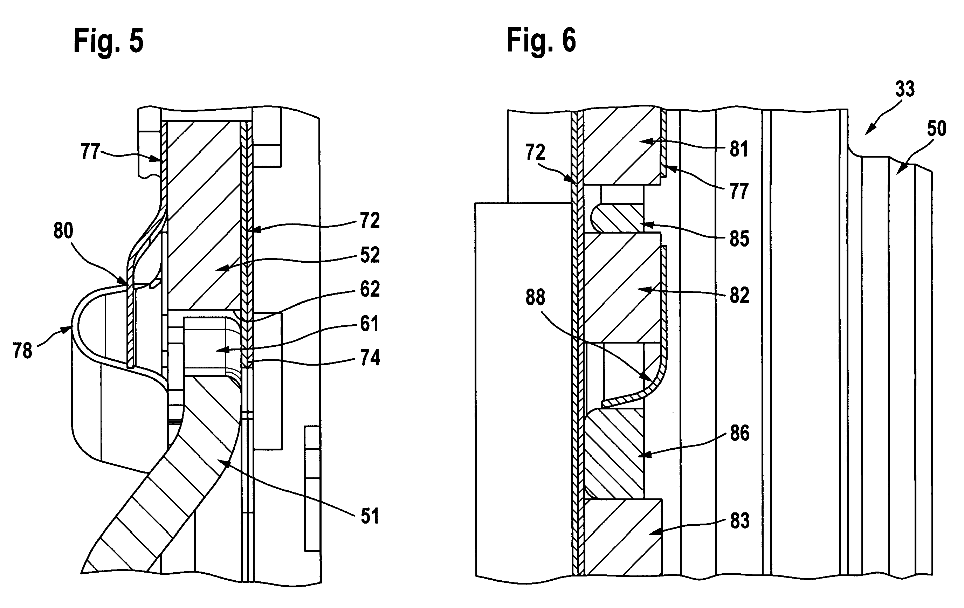

In Figur 5 sieht man, dass sich außer dem Schnapphaken 78 auch ein Positionierzahn 80 radial nach innen erstreckt. Der Positionierzahn 80 dient dazu, die Montage des Innenrings 51 in nur einer definierten relativen Position zu dem Außenring 52 zuzulassen.

In der Schnittdarstellung der Figur 6 sieht man drei Zähne 81 bis 83 der Außenverzahnung 61 des Innenrings. Außerdem sieht man zwei Zähne 85, 86 der Innenverzahnung 62 des Außenrings. Zur Flankenzentrierung und zum Verspannen der Verzahnungen gehen von dem Multifunktionsteil 77 mehrere Zentrierlaschen aus, von denen in Figur 6 nur eine Zentrierlasche 88 zu sehen ist. Durch die Zentrierlasche 88 wird der Zahn 86 der Innenverzahnung gegen den Zahn 83 der Außenverzahnung gedrückt.

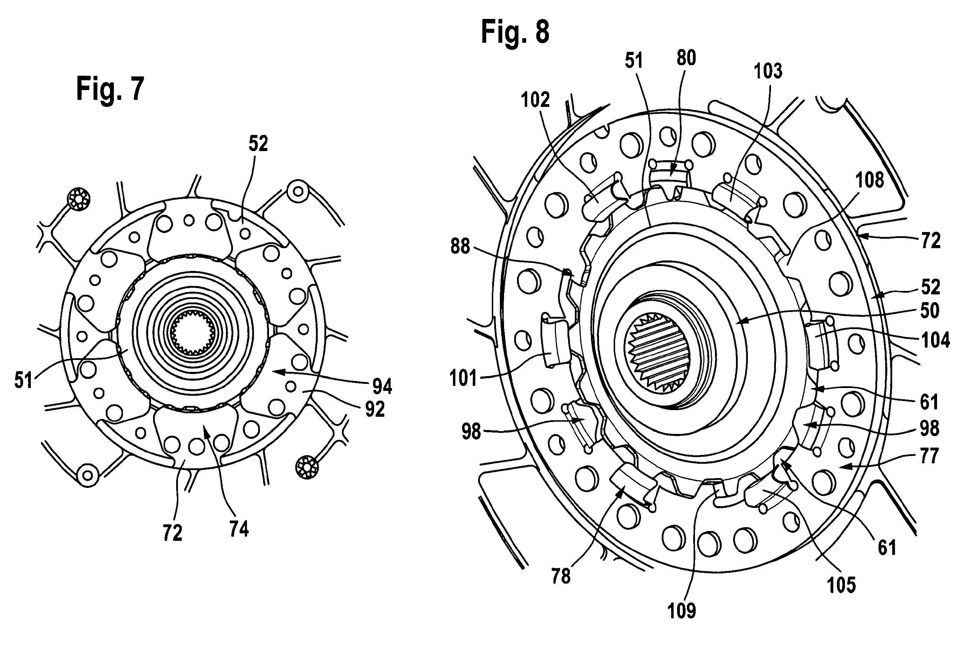

In Figur 7 sieht man, dass an dem äußeren Flanschring 52 mehrere Federsegmente 72, 92 gleichmäßig über den Umfang verteilt befestigt sind. Die Federsegmente 72, 92 weisen Federsegmentfüße 74, 94 auf, deren Innenradius kleiner als der Außenradius des inneren Flanschrings 51 ist, so dass der innere Flanschring 51 durch die Federsegmentfüße 74, 94 in einer axialen Richtung gesichert wird.

In Figur 8 sieht man, dass von dem Multifunktionsteil 77 nicht nur ein Positionierzahn 80, sondern zwei weitere Positionierzähne 98 ausgehen. Der Positionierzahn 80 ist jedoch anders geformt als die Positionierzähne 98. Der innere Flanschring 51 weist Positionierbereiche auf, die komplementär zu den Positionierzähnen 80, 98 gestaltet sind. Durch die unterschiedliche Form der Positionierzähne 80, 98 wird gewährleistet, dass der Innenring 51 nur in einer eindeutig definierten Position relativ zu dem Außenring 52 montierbar ist. Außerdem sieht man in Figur 8, dass an dem Außenring 52 nicht nur ein Schnapphaken 78, sondern fünf weitere Schnapphaken 101 bis 105 vorgesehen sind. Darüber hinaus sieht man, dass zusätzlich zu der Zentrierlasche 88 zwei weitere Zentrierlaschen 108, 109 von dem Außenring 52 ausgehen.

Im zusammengebauten Zustand der ersten Kupplungsscheibe 31, welche die Nabeneinrichtung 33 und den äußeren Flanschring 52 umfasst, erfolgt die Übertragung eines Drehmoments durch die miteinander in Eingriff befindlichen Verzahnungen 61, 62. Das erfindungsgemäße Kombinationsblech 77 erfüllt die folgenden Aufgaben: Vorzentrieren und Gewährleisten der Montage in nur einer Position durch die speziell hochgebogenen Positionierzähne 80, 98; Schnappverbindung zur einfachen nachträglichen Montage der Nabeneinrichtung 33 und axiale Sicherung im Betrieb durch die radial wirkenden Schnapphaken 78, 101 bis 105; Verspannung und Flankenzentrierung der Verzahnungen 61, 62 durch die tangential wirkenden Zentrierlaschen 88, 108, 109. Die Federsegmentfüße 74, 94 sind radial nach innen soweit verlängert, dass die Federsegmentfüße 74, 94 die Axialsicherung der Nabeneinrichtung 33 in die andere Axialrichtung übernehmen.

Die Nabeneinrichtung 33 und der Außenring 52 der Kupplungsscheibe 31 werden getrennt montiert. Die Nabeneinrichtung 33 wird vor der endgültigen Montage zum Auswuchten der Kupplungsscheibe in nur einer möglichen Position in den Außenring 52 eingeclipst. Dabei bewirkt die Federkraft der tangentialen Zentrierlaschen 88, 108, 109 eine Zentrierung der beiden Teile über die Zahnflanken. Daraufhin kann die komplette Kupplungsscheibe 31 relativ zum Innenprofil der Nabeneinrichtung 33 auf den geforderten maximalen Grenzwert gewuchtet werden. Dann werden die beiden Teile 33, 52 der Kupplungsscheibe 31 durch Zurückdrücken der radial wirkenden Schnapphaken 78, 101 bis 105 mit Hilfe eines Demontagewerkzeugs demontiert. Die Kupplungsscheibenhälften 33, 52 werden gepaart transportiert. Nach dem Montieren der Lagereinrichtung 37 und des dazugehörigen Lagersicherungsrings 55 der Doppelkupplung 6 erfolgt das finale Einclipsen der Nabeneinrichtung 33 in den Außenring 52 in nur einer möglichen Position. Dabei bewirkt die Federkraft der Zentrierlaschen 88, 108, 109 erneut eine Zentrierung der beiden Teile 51, 52 über die Zahnflanken und stellt somit den ursprünglichen Wuchtzustand wieder her.

Gemäß der vorliegenden Erfindung wird eine Kupplungsscheibe für eine Doppelkupplung geschaffen, bei der für einen Lagermontageprozess ein nachträgliches Montieren der Nabeneinrichtung erforderlich ist und in der durch das Kombinationsbauteil 77 die Aufgaben Einclipsen, axiales Fixieren, wiederholbares Zentrieren und wiederholbares Einstellen eines ursprünglichen Wuchtzustandes gewährleistet werden.

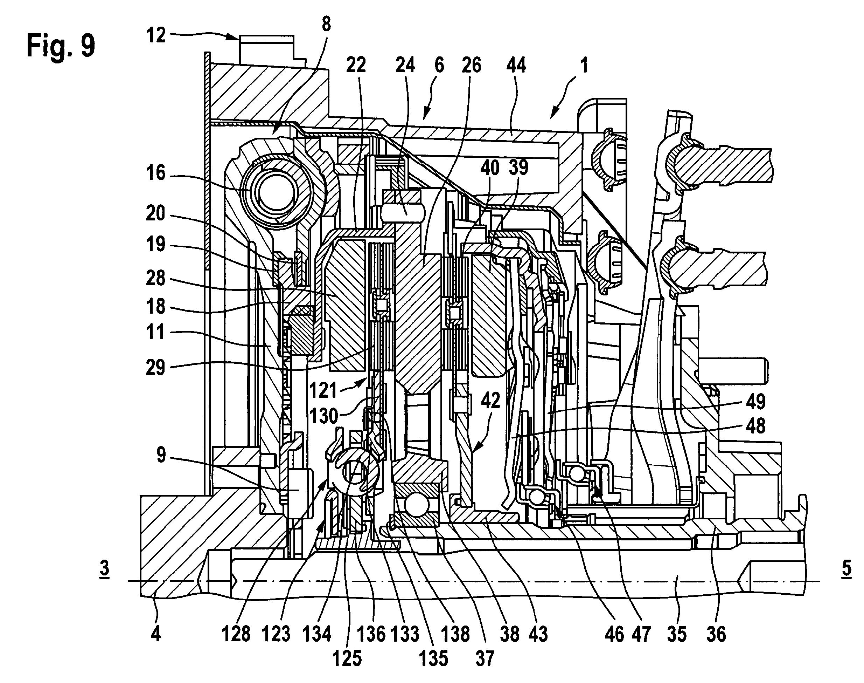

In Figur 9 ist eine ähnliche Drehmomentübertragungseinrichtung wie in Figur 1 im Halbschnitt dargestellt. Zur Bezeichnung gleicher Teile werden die gleichen Bezugszeichen wie in Figur 1 verwendet. Um Wiederholungen zu vermeiden, wird auf die vorangegangene Beschreibung der Figuren 1 bis 8 verwiesen. Im Folgenden wird nur auf die Unterschiede zwischen den beiden Ausführungsbeispielen eingegangen.

Bei dem in Figur 9 dargestellten Ausführungsbeispiel umfasst eine erste Kupplungsscheibe 121 eine Nabeneinrichtung 123, die eine Nabe 125 und eine Drehschwingungsdämpfungseinrichtung 128 umfasst, die auch als Torsionsschwingungsdämpfer bezeichnet wird. Die Nabeneinrichtung 123 ist lösbar, das heißt zerstörungsfrei trennbar, drehfest mit einem äußeren Flanschring 130 verbunden, der auch als Außenring bezeichnet wird. Die drehfeste Verbindung wird durch eine Außenverzahnung 131 der Nabeneinrichtung 123 gewährleistet, die mit einer Innenverzahnung 132 kämmt, die an dem Außenring 130 vorgesehen ist. Die Drehschwingungsdämpfungseinrichtung 128 umfasst ein Eingangsteil 133, an dem die Außenverzahnung 131 ausgebildet ist und das auch als Innenring bezeichnet wird. Das Eingangsteil 133 ist über Energiespeicherelemente 134 mit einem Ausgangsteil 136 gekoppelt. Das Ausgangsteil 136 wiederum ist an der Nabe 125 befestigt. Die Nabeneinrichtung 123 wird im eingebauten Zustand mit Hilfe eines Sicherungsrings 138 relativ zu dem Außenring 130 fixiert. Im eingebauten Zustand verhindert die Nabeneinrichtung 123 den Zugang zu einem Lagersicherungsring 135, mit dem das Lager 37 auf der hohlen Getriebeeingangswelle 36 in axialer Richtung fixiert ist.

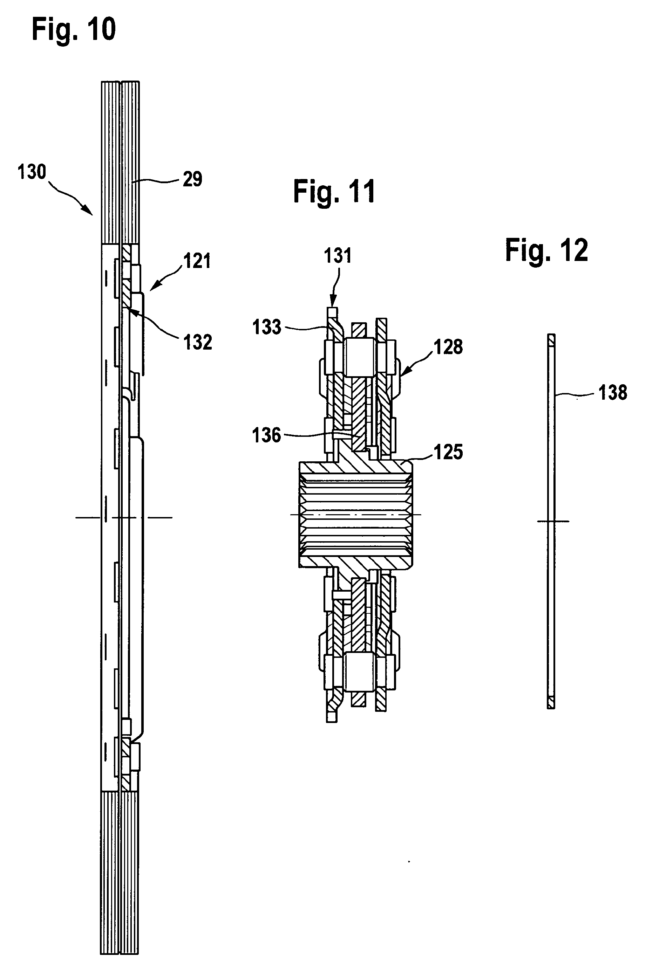

In Figur 10 ist der Außenring 130 der Kupplungsscheibe 121 in Alleinstellung im Längsschnitt dargestellt. Radial außen sind an der Kupplungsscheibe 121 die Reibbeläge 29 befestigt. Der Außenring 130 weist ein zentrales Durchgangsloch auf, das in radialer Richtung durch die Innenverzahnung 132 begrenzt wird.

In Figur 11 ist die Nabeneinrichtung 123 in Alleinstellung im Längsschnitt dargestellt. In Figur 12 ist der Sicherungsring 138 in Alleinstellung im Längsschnitt dargestellt. Der Sicherungsring 138 dient dazu, eine axial sichere Verbindung zwischen der Nabeneinrichtung 123 mit dem integrierten Torsionsschwingungsdämpfer 128 und dem Außenring 130 zu realisieren.

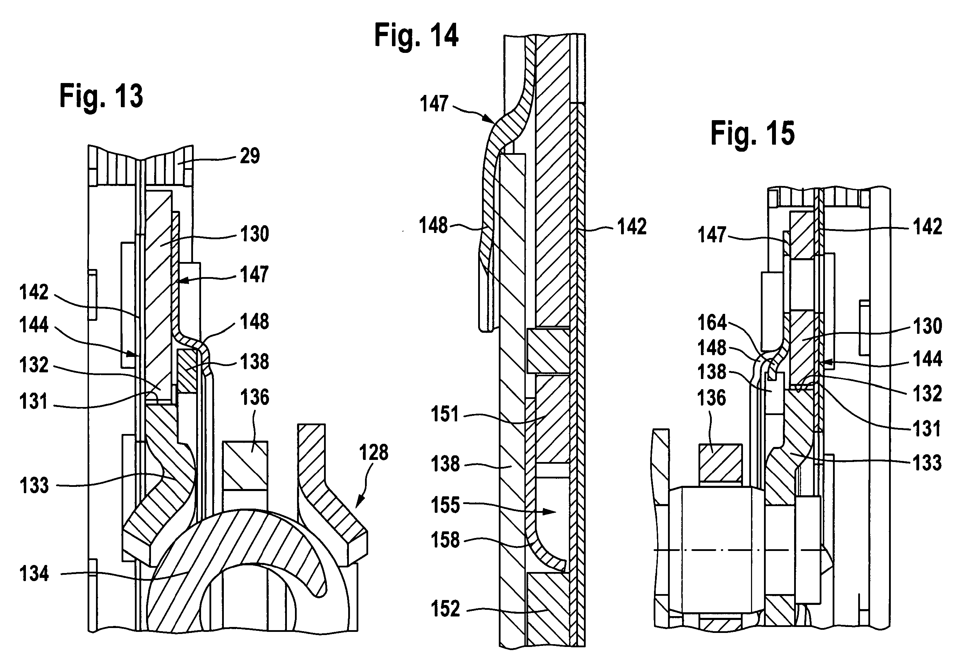

In Figur 13 ist eine Detailansicht aus Figur 9 vergrößert dargestellt. In der vergrößerten Darstellung sieht man, dass die Reibbeläge 29 an Federsegmenten 142 befestigt sind, die wiederum mit Hilfe von (nicht dargestellten) Nietverbindungen an dem Außenring 130 befestigt sind. Die Federsegmente 142 weisen radial nach innen gezogene Federsegmentfüße 144 auf, an denen das Eingangsteil 133, das auch als Innenring oder innerer Flanschring bezeichnet wird, mit seiner Außenverzahnung 131 anliegt. Somit sichern die Federsegmentfüße, von denen in Figur 13 nur einer mit dem Bezugszeichen 144 versehen ist, den Innenring 133 in einer axialen Richtung.

An der den Federsegmenten 142 abgewandten Seite des Außenrings 130 liegt ein Multifunktionsteil 147 an, das mit Hilfe der (nicht dargestellten) Nietverbindungen an dem Außenring 130 befestigt ist. Das Multifunktionsteil 147 ist aus Blech gebildet und wird daher auch als Multifunktionsblech oder Kombinationsblech bezeichnet. Von dem Multifunktionsteil 147 erstrecken sich radial nach innen mehrere Sicherungslaschen 148, von denen in Figur 13 nur eine zu sehen ist. Die Sicherungslaschen 148 sichern unter Zwischenschaltung des Sicherungsrings 138 den Innenring 133 in der anderen axialen Richtung.

In Figur 14 ist die Ansicht eines Schnitts in Umfangsrichtung dargestellt. In der Schnittansicht sieht man zwei Zähne 151, 152 der Außenverzahnung 131 und einen Zahn 155 der Innenverzahnung 132. Von dem Multifunktionsteil 147 geht eine Zentrierlasche 158 aus, die in tangentialer Richtung wirkt, um den Zahn 152 der Außenverzahnung gegen den benachbarten Zahn der Innenverzahnung zu drücken. Außerdem sieht man in Figur 14, dass die Sicherungslasche 148 den Sicherungsring 138 radial außen teilweise umgreift.

In Figur 15 ist eine weitere Detailansicht aus Figur 9 vergrößert dargestellt. In Figur 15 sieht man, dass von dem Multifunktionsteil 147 im Bereich des Schnapphakens 148 eine Verdrehsicherungslasche 164 ausgeht, die in den Sicherungsring 138 eingreift. Dadurch wird ein Verdrehen des Sicherungsrings 138 relativ zu dem Multifunktionsteil 147 verhindert.

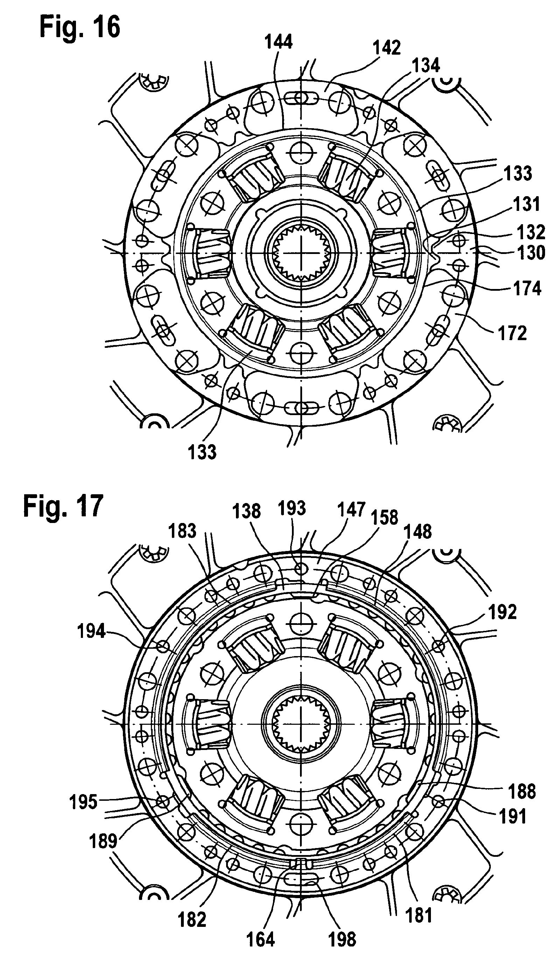

In Figur 16 sieht man, dass an dem Außenring 130 nicht nur ein Federsegment 142 mit einem Federsegmentfuß 144, sondern weitere Federsegmente 172 mit Federsegmentfüßen 174 befestigt sind. Insgesamt sind sieben Federsegmente mit den zugehörigen Federsegmentfüßen gleichmäßig über den Umfang des Außenrings 130 verteilt.

In Figur 17 sieht man, dass von dem Multifunktionsteil 147 nicht nur eine Sicherungslasche 148, sondern noch drei weitere Sicherungslaschen 181 bis 183 ausgehen. Außerdem sieht man, dass zusätzlich zu der Zentrierlasche 158 noch zwei weitere Zentrierlaschen 188, 189 von dem Multifunktionsteil 147 ausgehen. Darüber hinaus sieht man in Figur 17, dass das Multifunktionsteil 147 über seinen Umfang verteilt fünf Rundlöcher 191 bis 195 und ein Langloch 198 aufweist. Die Rundlöcher 191 bis 195 sowie das Langloch 198 dienen unter anderem dazu, eine Montagevorrichtung eindeutig relativ zu dem Multifunktionsteil 147 zu positionieren.

Die in den Figuren 9 bis 17 in verschiedenen Ansichten dargestellte Kupplungsscheibe 121 umfasst die Nabeneinrichtung 123, in welche der Torsionsschwingungsdämpfer 128 integriert ist, und den Außenring 130. Die Verzahnungen 131, 132 gewährleisten eine stabile Drehmomentübertragung zwischen dem Außenring 130 und dem Innenring 133. Die axiale Sicherung des Innenrings 133 beziehungsweise der Nabeneinrichtung 123 erfolgt durch die Federsegmentfüße 144, 174 und den Sicherungsring 138. Das in die Kupplungsscheibe 121 integrierte Multifunktionsteil 147 erfüllt die folgenden Aufgaben: Gewährleistung der axialen Sicherung der Nabeneinrichtung 123/des Torsionsschwingungsdämpfers 128 und des Außenrings 130 mit Hilfe des Sicherungsrings 138 durch die lokal hochgebogenen Sicherungslaschen 148, 181 bis 183; Verspannung und Flankenzentrierung der Verzahnung 131, 132 durch die tangential wirkenden Zentrierlaschen 158, 188, 189, die auch als Federlaschen bezeichnet werden, Verdrehsicherung des Sicherungsrings 138 durch die Verdrehsicherungslasche 164; eindeutige Positionierung der Montagevorrichtung für den Sicherungsring 138 durch das Langloch 198 und die Rundlöcher 191 bis 195. Die radial nach innen verlängerten Federsegmentfüße 144, 174 gewährleisten die axiale Sicherung der Nabeneinrichtung 123/des Torsionsschwingungsdämpfers 128 in die andere axiale Richtung.

Die Montage der Nabeneinrichtung 123 und des Außenrings 130 erfolgt getrennt. Der Außenring 130 wird vormoniert. Das Einlegen der Nabeneinrichtung 123 in den Außenring 130 ist nur in einer Position möglich. Die Nabeneinrichtung 123 wird soweit in den Außenring 130 eingeschoben, bis der Innenring 133 an den Federsegmentfüßen 144, 174 anliegt. Durch die Federkraft der tangential wirkenden Zentrierlaschen 158, 188, 189 werden die beiden Teile 123, 130 über die Zahnflanken der Verzahnungen 131, 132 zentriert. Anschließend wird die komplette Kupplungsscheibe relativ zu dem Innenprofil der Nabeneinrichtung 123 auf den geforderten maximalen Grenzwert gewuchtet. Nach dem Wuchten werden die beiden Teile demontiert und gepaart transportiert. Das finale Einlegen der Nabeneinrichtung 123 in den Außenring 130 ist nur in einer Position möglich. Das finale Einlegen der Nabeneinrichtung 123 erfolgt erst, nachdem das Lager 37 und der zugehörige Lagersicherungsring 135 montiert wurden. Dabei bewirkt die Federkraft der tangentialen Zentrierlaschen 158, 188, 189 erneut eine Zentrierung der beiden Teile über Zahnflanken und stellt den ursprünglichen Wuchtzustand wieder her. Nach dem finalen Einlegen der Nabeneinrichtung 123 in den Außenring 130 erfolgt die Montage des Sicherungsrings 138 in einer definierten Position mit Hilfe einer Montagevorrichtung, die über das Langloch 198 und die Rundlöcher 191 bis 195, die in dem Multifunktionsteil 147 beziehungsweise dem Außenring 130 angebracht sind, positioniert wird.

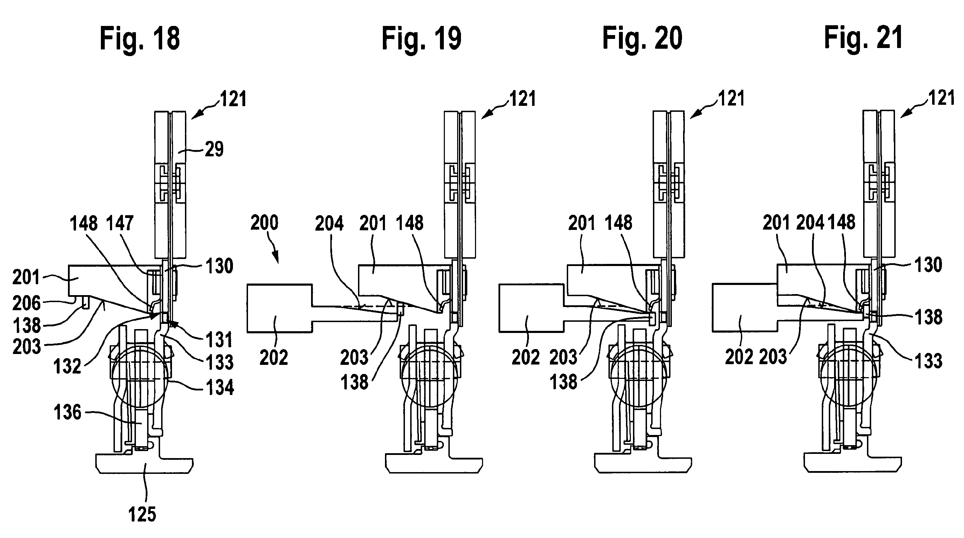

In den Figuren 18 bis 21 ist das Einsetzen des Sicherungsrings 138 mit Hilfe einer Montagevorrichtung 200 in verschiedenen Montageschritten dargestellt. Die Montagevorrichtung 200 umfasst ein erstes Montagewerkzeug 201 und ein zweites Montagewerkzeug 202. Das erste Montagewerkzeug 201 ist mit einem Innenkonus 203 ausgestattet. Das zweite Montagewerkzeug 202 ist mit einem Außenkonus 204 ausgestattet. Die Winkel der Konusse 203, 204 sind so gewählt, dass der zwischen den Konussen begrenzte Ringspalt zu der Kupplungsscheibe 121 hin spitz zuläuft.

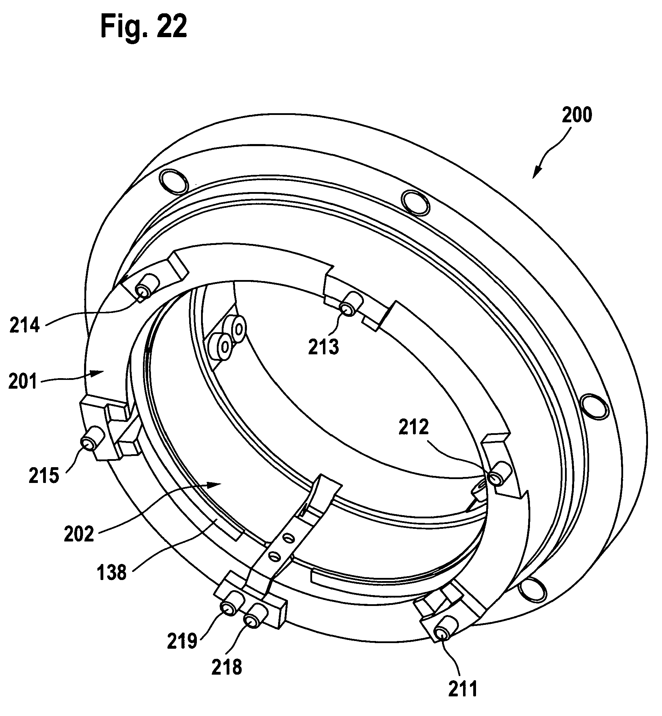

In Figur 18 ist das Ansetzen des ersten Montagewerkzeugs 201 an die Kupplungsscheibe 121 dargestellt. Der Sicherungsring 138, der vorzugsweise geschlitzt ausgebildet ist, liegt mit seinem äußeren Umfang radial innen an einem kreiszylinderförmigen Abschnitt 206 des ersten Montagewerkzeugs 201 an. Die Positionierung des ersten Montagewerkzeugs 201 erfolgt mit Hilfe von Positionierstiften 211 bis 215 und 218 bis 219, die in axialer Richtung von dem ersten Montagewerkzeug 201 abstehen, wie in Figur 22 gezeigt ist. Beim Positionieren werden die Positionierstifte 218, 219 des ersten Montagewerkzeugs 201 in das Langloch (198 in Figur 17) eingeführt. Gleichzeitig werden die Positionierstifte 211 bis 215 in die Rundlöcher (191 bis 195 in Figur 17) eingeführt. Dadurch wird das erste Montagewerkzeug 201 eindeutig zu dem Multifunktionsteil 147 und dem Außenring 130 positioniert.

In Figur 19 ist dargestellt, dass nach dem Einlegen des Sicherungsrings 138 in das erste Montagewerkzeug 201 das zweite Montagewerkzeug 202 in das erste Montagewerkzeug 201 eingeführt wird, bis es an dem Sicherungsring 138 anliegt. Daraufhin wird der Sicherungsring 138 mit Hilfe des zweiten Montagewerkzeugs 202 in axialer Richtung zu der Kupplungsscheibe 128 hin verschoben. Dabei bewegt sich der Sicherungsring 138 entlang dem Innenkonus 203 des ersten Montagewerkzeugs 201. Dabei wird der Sicherungsring 138 soweit zusammengedrückt, bis sein Außendurchmesser etwas kleiner als der Innendurchmesser der Sicherungslaschen 148 ist. Dieser Zustand ist in Figur 20 dargestellt.

Wie man Figur 20 sieht, wird der Sicherungsring 138 radial innen an den Sicherungslaschen 148 vorbei bewegt, bis er an der Schnittstelle zwischen dem Innenring 133 und dem Außenring 130 anliegt, wie in Figur 21 gezeigt ist. Dann entspannt sich der Sicherungsring 138 wieder, bis er in seiner Endposition unter Vorspannung an dem Multifunktionsteil 147 anliegt.

### Bezugszeichenliste

- 1.: Antriebsstrang
- 3.: Antriebseinheit
- 4.: Kurbelwelle
- 5.: Getriebe
- 6.: Doppelkupplung
- 8.: Drehschwingungsdämpfungseinrichtung
- 9.: Schraubverbindungen
- 11.: Eingangsteil
- 12.: Anlasserzahnkranz
- 16.: Federeinrichtung
- 18.: Ausgangsteil
- 19.: Gleit-/Reibring
- 20.: Tellerfeder
- 22.: Kupplungsgehäuseteil
- 24.: Nietverbindung
- 26.: Zwischendruckplatte
- 28.: Druckplatte
- 29.: Reibbeläge
- 31.: erste Kupplungsscheibe
- 33.: Nabeneinrichtung
- 35.: erste Getriebeeingangswelle
- 36.: zweite Getriebeeingangswelle
- 37.: Wälzlager
- 38.: Nabenteil
- 39.: Druckplatte
- 40.: Reibbeläge
- 42.: zweite Kupplungsscheibe
- 43.: Nabenteil
- 44.: Kupplungsgehäuse
- 46.: Betätigungseinrichtung
- 47.: Betätigungseinrichtung
- 48.: Betätigungshebel
- 49.: Betätigungshebel
- 50.: Nabe
- 51.: innerer Flanschring
- 52.: äußerer Flanschring
- 55.: Lagersicherungsring
- 56.: Montageöffnung
- 58.: Innenverzahnung
- 61.: Außenverzahnung
- 62.: Innenverzahnung
- 65.: Öffnungsdurchmesser
- 70.: Nietverbindungen
- 72.: Federsegment
- 74.: Federsegmentfuß
- 77.: Multifunktionsteil
- 78.: Schnapphaken
- 80.: Positionierzahn
- 81.: Zahn
- 82.: Zahn
- 83.: Zahn
- 85.: Zahn
- 86.: Zahn
- 88.: Zentrierlasche
- 92.: Federsegment
- 94.: Federsegmentfuß
- 98.: Positionierzähne
- 101.: Schnapphaken
- 102.: Schnapphaken
- 103.: Schnapphaken
- 104.: Schnapphaken
- 105.: Schnapphaken
- 108.: Zentrierlasche
- 109.: Zentrierlasche
- 121.: Kupplungsscheibe
- 123.: Nabeneinrichtung
- 125.: Nabe
- 128.: Drehschwingungsdämpfereinrichtung
- 130.: äußerer Flanschring
- 131.: Außenverzahnung
- 132.: Innenverzahnung
- 133.: Eingangsteil
- 134.: Energiespeicherelemente
- 135.: Lagersicherungsring
- 136.: Ausgangsteil
- 138.: Sicherungsring
- 142.: Federsegmente
- 144.: Federsegmentfüße
- 147.: Multifunktionsteil
- 148.: Sicherungslasche
- 151.: Zahn
- 152.: Zahn
- 155.: Zahn
- 158.: Zentrierlasche
- 164.: Verdrehsicherungslasche
- 172.: Federsegmente
- 174.: Federsegmentfüße
- 181.: Sicherungslasche
- 182.: Sicherungslasche
- 183.: Sicherungslasche
- 188.: Zentrierlasche
- 189.: Zentrierlasche
- 191.: Rundloch
- 192.: Rundloch
- 193.: Rundloch
- 194.: Rundloch
- 195.: Rundloch
- 198.: Langloch
- 200.: Montagevorrichtung
- 201.: erstes Montagewerkzeug
- 202.: zweites Montagewerkzeug
- 203.: Innenkonus
- 204.: Außenkonus
- 206.: kreiszylinderförmiger Abschnitt
- 211.: Positionierstift
- 212.: Positionierstift
- 213.: Positionierstift
- 214.: Positionierstift
- 215.: Positionierstift
- 218.: Positionierstift
- 219.: Positionierstift

## Patentansprüche

1. Kupplungsscheibe für eine Kupplung, insbesondere eine Doppelkupplung (6), mit einem Außenring (52;130) und einer Nabeneinrichtung (33;123), die drehfest und lösbar, das heißt wiederholt zerstörungsfrei trennbar, mit dem Außenring (52;130) verbunden ist, **dadurch gekennzeichnet, dass** die Kupplungsscheibe (31;121) ein Multifunktionsteil (77;147) umfasst, das eine Schnappverbindung und/oder eine Zentrierung der Nabeneinrichtung (33;123) relativ zu dem Außenring (52; 130) ermöglicht.

2. Kupplungsscheibe nach Anspruch 1, **dadurch gekennzeichnet, dass** das Multifunktionsteil (77;147) mehrere in Umfangsrichtung verteilt angeordnete und in tangentialer Richtung wirkende, elastische Zentrierlaschen (88,108,109;158,188,189) aufweist.

3. Kupplungsscheibe nach einem der vorhergehenden Ansprüche, **dadurch gekennzeichnet, dass** das Multifunktionsteil (77;147) verschiedene Positionierelemente (80,98) aufweist, die eine definierte Positionierung der Nabeneinrichtung (33) relativ zu dem Außenring (52) ermöglichen.

4. Kupplungsscheibe nach Anspruch 3, **dadurch gekennzeichnet, dass** die Positionierelemente (80,98) so gestaltet und/oder angeordnet sind, dass sie eine Vorzentrierung der Nabeneinrichtung (33) relativ zu dem Außenring (52) ermöglichen.

5. Kupplungsscheibe nach einem der vorhergehenden Ansprüche, **dadurch gekennzeichnet, dass** das Multifunktionsteil (77) mehrere in Umfangsrichtung verteilt angeordnete in radialer Richtung wirkende, elastische Schnapphaken (78,101-105) aufweist.

6. Kupplungsscheibe nach einem der vorhergehenden Ansprüche, **dadurch gekennzeichnet, dass** die Nabeneinrichtung (123) mit Hilfe eines Sicherungsrings (138) in einer axialen Richtung relativ zu dem Außenring (130) gesichert ist.

7. Kupplungsscheibe nach Anspruch 6, **dadurch gekennzeichnet, dass** das Multifunktionsteil (147) mehrere Sicherungslaschen (148,181-183) aufweist, die den Sicherungsring (138) im eingebauten Zustand teilweise umgreifen.

8. Kupplungsscheibe nach Anspruch 6 oder 7, **dadurch gekennzeichnet, dass** das Multifunktionsteil (147) eine Verdrehsicherungslasche (164) aufweist, die im eingebauten Zustand des Sicherungsrings (138) in diesen eingreift.

9. Kupplungsscheibe nach einem der vorhergehenden Ansprüche, **dadurch gekennzeichnet, dass** das Multifunktionsteil (147) mindestens ein Langloch (198) und/oder mehrere Rundlöcher (191-195) aufweist, das beziehungsweise die so angeordnet und gestaltet sind, dass es beziehungsweise sie eine definierte Positionierung einer Montagevorrichtung (200) relativ zu dem Multifunktionsteil (147) ermöglicht beziehungsweise ermöglichen.

10. Kupplungsscheibe nach einem der vorhergehenden Ansprüche, **dadurch gekennzeichnet, dass** das Multifunktionsteil (77;147) an dem Außenring (52;130) befestigt ist.

11. Kupplungsscheibe nach einem der vorhergehenden Ansprüche, **dadurch gekennzeichnet, dass** das Multifunktionsteil (77;147) aus Blech gebildet ist.

12. Kupplungsscheibe nach einem der vorhergehenden Ansprüche, **dadurch gekennzeichnet, dass** die Kupplungsscheibe (31;121), insbesondere der Außenring (52;130), Belagfedersegmente (72,92;142,172) aufweist, die den Außenring (52;130) und die Nabeneinrichtung (33;123) in einer axialen Richtung relativ zueinander sichern.

13. Kupplungsscheibe nach einem der vorhergehenden Ansprüche, **dadurch gekennzeichnet, dass** der Außenring (52; 130) eine Innenverzahnung (62; 132) aufweist, in welche eine Außenverzahnung (61; 131) eingreift, die an der Nabeneinrichtung (33;123) vorgesehen ist.

14. Kupplungsscheibe nach einem der vorhergehenden Ansprüche, **dadurch gekennzeichnet, dass** die Nabeneinrichtung (123) einen Drehschwingungsdämpfer (128) umfasst.

15. Drehmomentübertragungseinrichtung im Antriebsstrang (1) eines Kraftfahrzeugs zur Drehmomentübertragung zwischen einer Antriebseinheit (3), insbesondere einer Brennkraftmaschine, mit einer Abtriebswelle (4), insbesondere einer Kurbelwelle, und einem Getriebe (5) mit zwei Getriebeeingangswellen (35,36), die jeweils mit einer Reibbeläge (29,40) aufweisenden Kupplungsscheibe (31,42) einer Doppelkupplung (6) drehfest verbunden sind, **dadurch gekennzeichnet, dass** an einer der Getriebeeingangswellen (35) eine Kupplungsscheibe (31;121) nach einem der vorhergehenden Ansprüche lösbar, das heißt zerstörungsfrei trennbar, befestigt ist.
